Europäisches Patentamt

European Patent Office

Office européen des brevets

(19)

(11) **EP 1 037 439 A1**

(12) # EUROPEAN PATENT APPLICATION

(43) Date of publication:
**20.09.2000 Bulletin 2000/38**

(51) Int Cl.[7]: **H04L 27/233**, H04L 25/03

(21) Application number: **99600009.7**

(22) Date of filing: **06.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.03.1999 GR 99100089**

(71) Applicant: **INTRACOM A.E.**
**GR-190 02 Paiania, Attica (GR)**

(72) Inventors:
- **Frantzeskakis, Emmanuel c/o Intracom S.A. Athens (GR)**
- **Papathanasiou,Christos. c/o Intracom S.A. Athens (GR)**

- **Dimosthenis,Doumenis. c/o Intracom S.A. Athens (GR)**
- **Posonidis,Aris. c/o Intracom S.A. Athens (GR)**
- **Charalampos,Kalatzis. c/o Intracom S.A. Athens (GR)**
- **Vasilios,Koratzinos. c/o Intracom S.A. Athens (GR)**
- **Konstantinos,Aretos. c/o Intracom S.A. Athens (GR)**

Remarks:
Amended claims in accordance with Rule 86 (2) EPC.

(54) **Receiver structure for Offset Differential Quadrature Phase Shift Keying**

(57) The present invention concerns a method and an apparatus for differentially coherent reception in Offset Differential QPSK (ODQPSK) signaling and some Continuous Phase Modulation (CPM) signaling schemes. The method is operative in a receiver structure which is essentially characterised by one of two alternative types of differentially coherent demodulator followed by a two-input recursive computation means responsible for the simultaneous soft differential decoding and channel equalisation. One demodulator type involves correlation of the received intermediate frequency signal with two delayed versions of it, wherein the delay times differ by a half transmission bit period and low pass filtering. The second demodulator type involves successive down-conversion of the received intermediate frequency signal by using a free running local oscillator, matched filtering, phase extraction, phase differentiation and differential phase delaying by a half transmission bit period. The invention more particularly applies to wireless local loop, to satellite links, and to mobile radio communications.

FIG 2

EP 1 037 439 A1

**Description**

**BACKGROUND OF THE INVENTION**

This invention relates to differentially coherent reception in Offset Differential QPSK (ODQPSK) signaling and some Continuous Phase Modulation (CPM) signaling schemes and more particularly to apparatus and methods for demodulating of ODQPSK, MSK, GMSK and TFM signals in a differentially coherent manner, as well as performing joint channel equalisation and soft differential decoding on these signals.

Two of the major factors characterising the efficiency of modern wireless digital communication systems are the required bandwidth allocation and power consumption. Approximating a constant envelop characteristic, Offset Quadrature Phase Shift Keying (OQPSK) modulation allows the operation of power efficient low output back-off (OBO) or 1dB compression point power amplifier (PA) with the penalty of only a small spectral regrowth. Furthermore, an amplitude limiter can be used at the receiver side with negligible performance degradation. For these reasons, OQPSK modulation has been adopted by a multitude of wireless digital transmission applications, such as satellite communications. The use of a non-coherent or differentially coherent receiver structure implies an advantage on the speed of transmission link restoration, especially in communication over fading channels, and/or burst mode transmission systems such as the Time Division Multiple Access (TDMA) systems. This desired reliability feature can be achieved at the cost of some performance degradation in the signal-to-noise ratio (SNR) versus bit-error-rate (BER) curve. Specifically for the case of OQPSK though, inter-symbol interference (ISI) intervenes between the in-phase (I) and quadrature (Q) data streams if a non-coherent or a differentially coherent receiver scheme is used. Therefore, although such schemes have been proposed in the past, the aforementioned degradation is considerable and consequently coherent OQPSK is exclusively deployed so far.

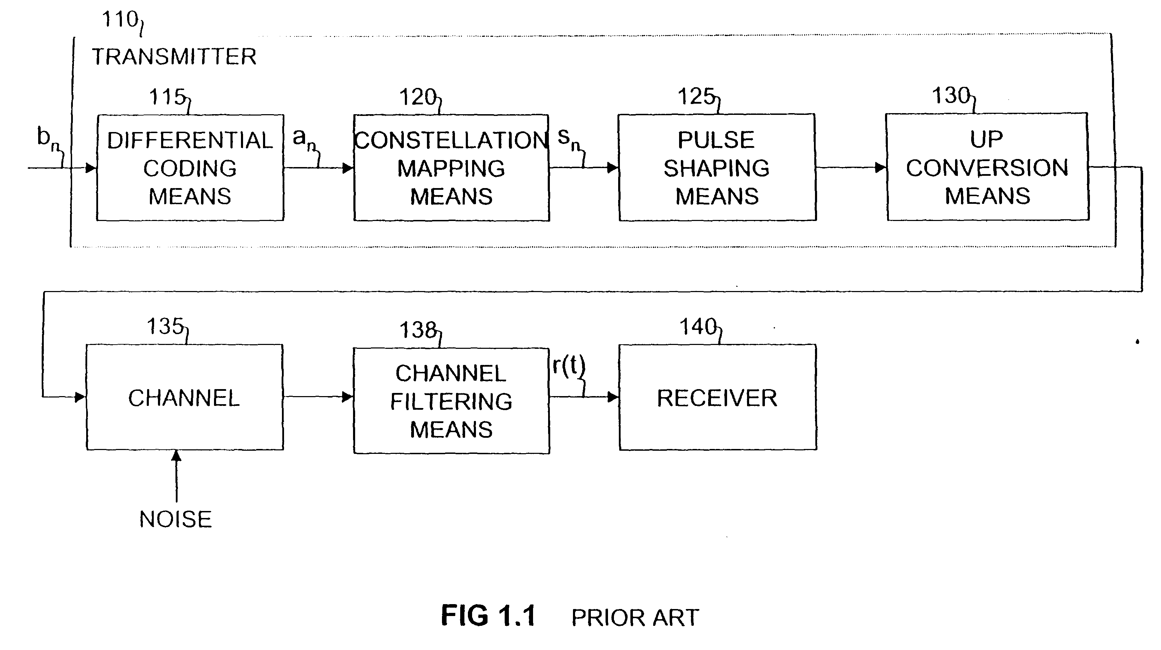

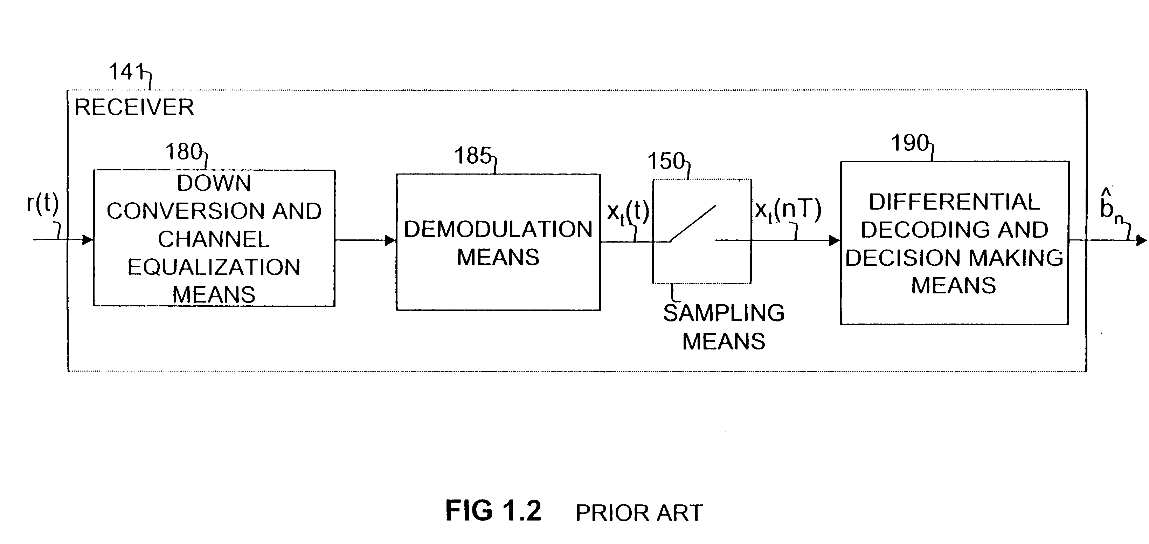

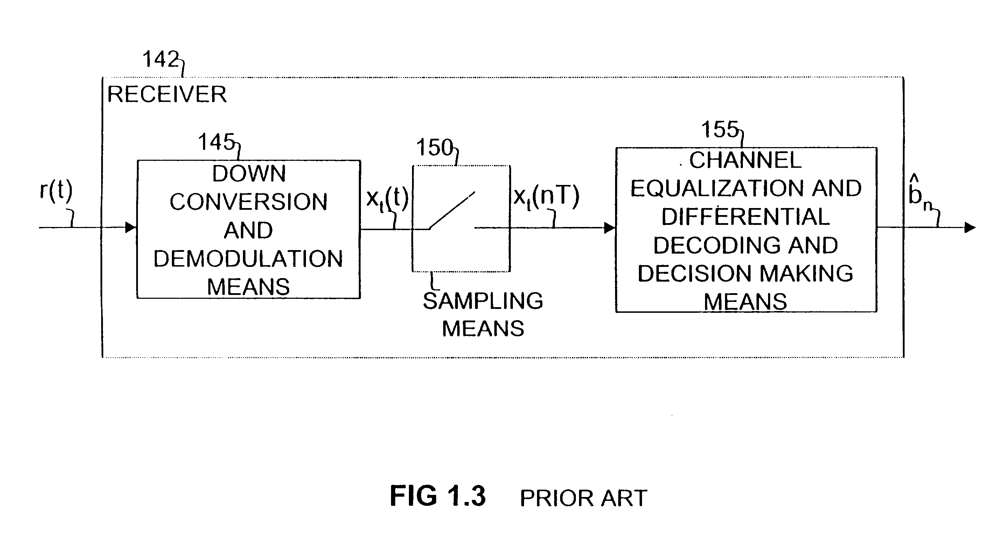

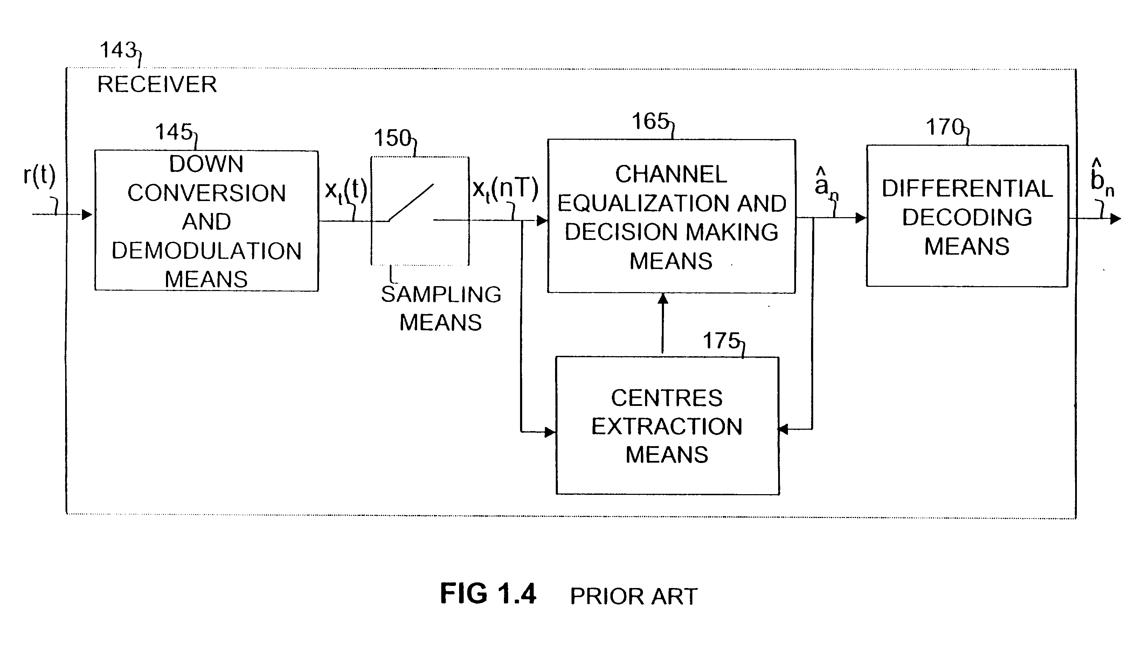

The successive processing stages of the transmission systems under consideration are outlined in FIG.1.1. A transmitter 110 consists of a differential encoder 115 accepting a binary sequence $\{b_n\}$ and producing the differentially encoded sequence $\{a_n\}$, a constellation mapping means 120 accepting $\{a_n\}$ and producing a symbol sequence $\{s_n\}$ and a pulse shaping filter 125 followed by up-conversion equipment 130 responsible for carrier modulation. The resulted signal is transmitted over a noisy channel 135 that may also introduce inter-symbol interference (ISI) and passes through a channel filter 138 at the receiver side in order to be separated by the signals transmitted in adjacent channels. 138 produces the signal $r(t)$ that is fed to the receiver equipment 140. Five operations take place in this block. First, signal down-conversion removing the carrier frequency, second, differential demodulation removing the phase differentiation, third, channel equalisation removing ISI introduced by the channel and filtering means in the transmit-receive path, fourth, decision making and fifth, differential decoding. Prior art concerning down-conversion and demodulation in the ODQPSK and related modulation types, as well as the application of centre based channel equalisation is summarised below.

In the paper J.H. Colin et al., 1993 (J.H. Colin, G. Englefield, P.A. Goud, "Performance of SRC-filtered ODQPSK in mobile radio communications", Proceedings of the 43rd IEEE Vehicular Technology Conference, pp. 668-671, 1993) a baseband ODQPSK receiver structure is suggested. It consists of a 4th root raised cosine receiver filter followed by a real correlator, lowpass filtering and thresholder decision logic. A similar approach is followed in U. S. Pat. No 4,989,220 assigned to M.J. Serrone in 1991, where an architecture built around a phase splitter is employed for demodulating M-ary PSK signals wherein the modulation is limited to phase transitions between adjacent phase states, including ODQPSK. A more systematic treatment has been addressed by G.K.Kaleh, 1989 ("A Differentially Coherent Receiver for Minimum Shift Keying Signal", IEEE Journal on Selected Areas in Communications, Vol. 7, No 1, pp.99-106, Jan. 1989). A differentially coherent receiver structure that covers the case of ODQPSK modulation is investigated therein. Both baseband and passband implementations are considered. In the former, the receiver consists of a receiver filter incorporating a zero forcing equalizer followed by a complex correlator circuit. The latter consists of the corresponding passband receiver filter followed by a structure employing a Hilbert transform, lowpass filtering and down-conversion. This can be simplified to a cascade of receiver filtering, real correlation and lowpass filtering, provided certain condition on the transmission bit rate and the passband frequency is satisfied. These circuits have also been patented (U.S. Pat. No 5,048,058, assigned to Kaleh in 1991). The overall structure has been supplemented in G.K. Kaleh,1992 ("Differential Detection via the Viterbi Algorithm for Offset Modulation and MSK-Type Signals", IEEE Trans. On Vehicular Technology, Vol. 41, No 4, pp. 401-406, Nov. 1992) with a 2-state Viterbi algorithm appropriate for differential decoding and decision making. The resulting receiver structure is depicted in FIG. 1.2. A different approach has been adopted by C.G. Gunther et al, 1994 (C.G. Gunther and J. Haberman, "DOQPSK-differential demodulation of filtered offset QPSK", IEEE 44th Vehicular Technology Conference Proceedings, vol. 3, pp.1542-1546, 1994). Referring to FIG.1.3, a simple down-conversion using the quadrature phases of a free running local oscillator and a pair of square root raised cosine filters, followed by a demodulator consisting of a complex correlator form the block 145. The resulted baseband signal $X_t(t)$ is sampled and fed to a 16-state Viterbi algorithm (VA) 155 appropriate for differential decoding, ISI compensation and decision making. The 16-state VA undertakes the equalisation procedure, thus eliminating the need of the zero-forcing equaliser from the receiver filter. No training is needed for the VA, since perfect Nyquist filtering is considered and therefore the expected receiver values can be computed algebraically. This method has been patented too (U.S. Pat. No 5,615,230, assigned to Gunther et al. in 1997). All of the above reported methods exhibit an SNR-BER performance degradation of at least 4 dB compared to the performance of coherent OQPSK. Furthermore, they suffer from further degradation if the channel is band-limited and/or nonlinear reception, such as hard-limiting, is considered.

A more flexible implementation of the equalisation and decision making logic in a differentially coherent ODQPSK receiver is obtained by direct application of the theoretical background in S.Theodoridis et al., 1995 (S. Theodoridis, C.F.N.Cowan, C.P.Callender, C.M.S.See, "Schemes for equalization of communication channels with nonlinear impairments", IEE Proceedings on Communications, Vol.142, No 3, pp.165-171, 1995) discussing the problem of channel equalisation. The resulted receiver structure is depicted in FIG.1.4. The received signal $r(t)$ passes through a down-conversion and demodulation block 145 producing a baseband signal $X_t(t)$. The latter undergoes sampling producing the signal $X_t(nT)$, where $T$ denotes the bit period, that feeds block 165 responsible for channel equalisation and decision making. The resulted bit sequence $\{\hat{a}_n\}$ along with the sampled baseband signal $X_t(nT)$ feed a training equipment 175 that computes a set of centres used as parameters in block 165. The received sequence $\{b_n\}$ is produced by a differential decoder 170 which receives the sequence $\{\hat{a}_n\}$ as input.

## SUMMARY OF THE INVENTION

According to the invention, a method and an apparatus are provided that specify flexible, better performance differentially coherent receivers for ODQPSK and affiliated signaling schemes. More particularly, the underlying principle is as follows: The demodulator feeds the decision making logic with two-dimensional data for each transmitted bit $b_n$ reflecting information at two distinct time instances that differ by a time interval equal to half the transmission bit period $T/2$, while the concept of the multi-purpose decision making logic of block 155, that is simultaneous soft differential decoding and channel equalisation, is maintained. Nevertheless, here the decision making logic employs a recursive center based cost minimization process similar to the one reported by S.Theodoridis et al., 1995. Therefore the advantage of flexible algorithm training can be exploited in order to handle system non-linearities, and time variance without requiring the explicit channel response estimation.

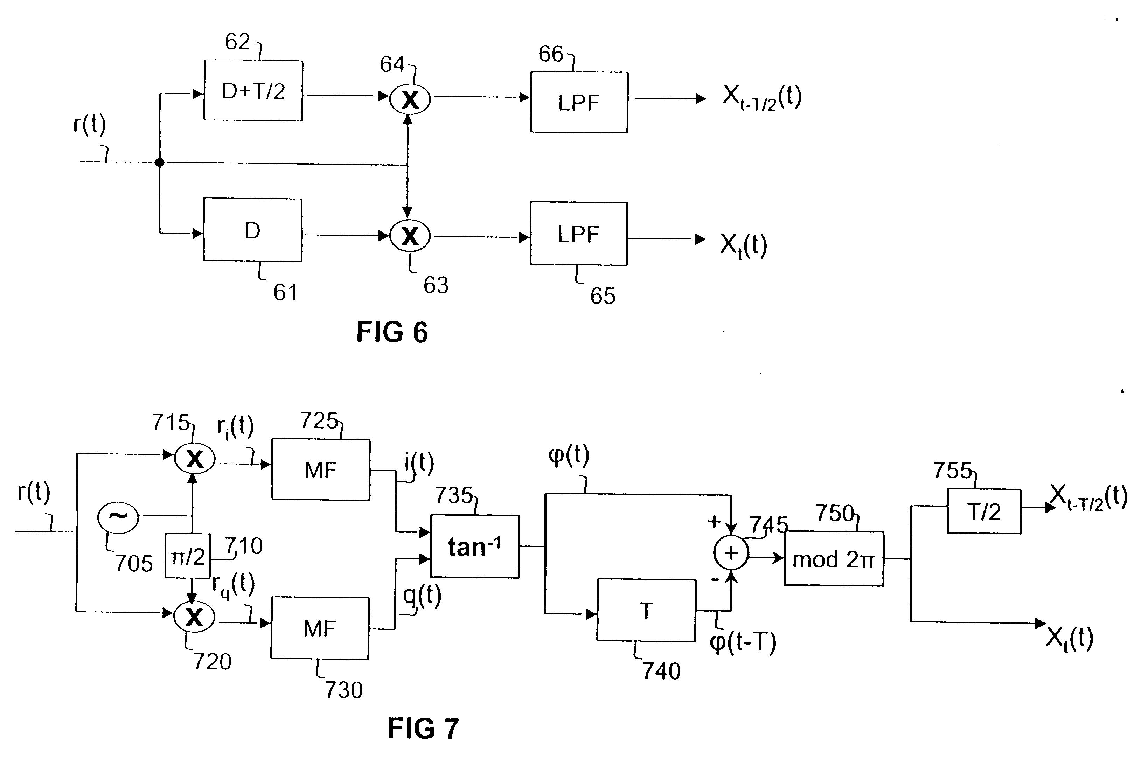

For the ODQPSK and some Continuous Phase Modulation (CPM) types of signaling in particular, two alternative structures for differentially coherent demodulation are specified. The first one comprises two real multipliers correlating the input signal $r(t)$ with two delayed versions of it differing by a time interval equal to half the bit period $T/2$ as shown in FIG. 6. A pair of lowpass filters with cutoff frequency at symbol frequency follows resulting the baseband signals $X_t(t)$ and $X_{t-T/2}(t)$. The second demodulation structure involves simple down-conversion using the quadrature phases of a free running local oscillator and a pair of matched filters, followed by an inverse tangent operator and a modulo-$2\pi$ difference operator resulting a $X_t(t)$ signal. The $X_{t-T/2}(t)$ signal is generated by simply delaying $X_t(t)$ by a time interval equal to $T/2$.

The family of receivers specified above can provide for the case of ODQPSK an SNR-BER performance with a degradation of only 1.5 dB compared to the performance of coherent OQPSK. This performance margin can be traded either for a simpler radio circuitry, thus reducing overall implementation cost, or emitting less signal power, thus reducing power consumption on the power amplifier. In any case, the resulted performance supersedes existing noncoherent or differentially coherent OQPSK receiver structures for all cases of bandwidth / channel filtering demands. Thus, the combination of low OBO PA, band-limited transmission and limiter receiver along with differential coherent reception can be enjoyed. Furthermore, the robustness against co-channel and adjacent channel interference, as well as robustness against filtering imperfections are improved. Finally, since real-time adaptation of the decision logic parameters is feasible the reliability in data transmission over time variable channels, such as fading channels, is increased too.

The receiver structures discussed so far, apart from the ODQPSK type of signaling, can also be applied for differential coherent reception of Minimum Shift Keying (MSK), Gaussian MSK (GMSK), Tamed Frequency Modulation (TFM) signaling, as well as all OQPSK compatible modulation schemes, that is modulation schemes which can be coherently demodulated by an ordinary OQPSK coherent demodulator. Examples of such schemes are UF-OQPSK (T.Le-Ngoc, K.Feher and H.Pham-Van, "New Modulation Techniques for Low-Cost Power and Bandwidth Efficient Satellite Earth Station", IEEE Trans. On Communications, vol.30, pp.275-283, Jan.1982) and FQPSK (H.Mehdi and K.Feher, "FQPSK, Power and Spectral Efficient Family of Modulations for Wireless Communication Systems", Proceedings of the 44th IEEE Vehicular Technology Conference, vol.3, pp.1562-1566, 1994).

## BRIEF DESCRIPTION OF THE DRAWINGS

The features and advantages of the invention will be more apparent from the detailed description hereunder taken in conjunction with the accompanying drawings, wherein:

FIG.1.1 illustrates the successive processing stages of a transmission system to which the invention is applicable;
FIGS. 1.2 to 1.4 illustrate the schematic block diagrams of prior art receivers referred to in FIG.1.1:
FIG. 2 illustrates a first embodiment of a receiver structure according to the present invention;
FIG. 3 illustrates a second embodiment of a receiver structure according to the present invention;
FIG. 4 illustrates the trellis diagram characterising the Viterbi algorithm employed by a specific example of the channel equalisation and differential decoding circuit;
FIG. 5 illustrates the schematic block diagram of the Viterbi algorithm employed by a specific example of the channel equalisation and differential decoding circuit;
FIG. 6 illustrates a first specific example of the frequency down-conversion and demodulation circuit structure according to the present invention;
FIG. 7 illustrates a second specific example of the frequency down-conversion and demodulation circuit structure according to the present invention.

## DETAILED DESCRIPTION OF THE PREFERRED EMBODIMENTS

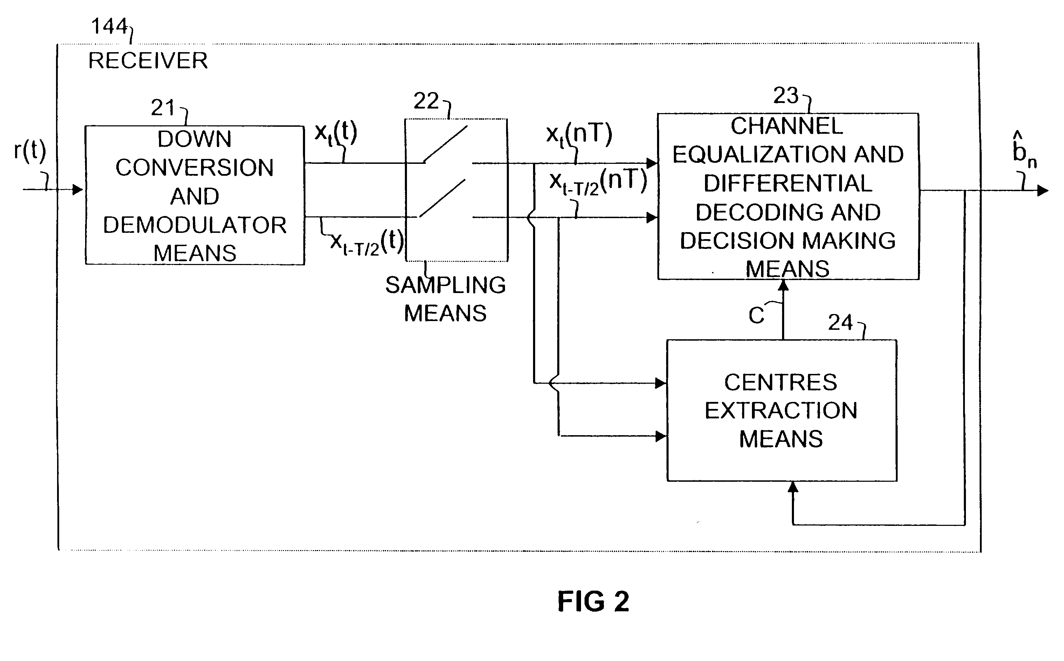

The embodiments described hereunder suggest realisations of the invention as examples without constituting any limitation whatsoever. Referring to FIG.2, there is shown a specific embodiment of a receiver 144 in accordance with the invention. The receiver 144 accepts the input signal $r(t)$, passes it through a down-conversion and demodulation block 21 producing two baseband signals $X_t(t)$ and $X_{t-T/2}(t)$ reflecting information at two distinct time instances that differ by a time interval equal to half the transmission bit period $T/2$. This pair of signals undergo sampling producing the signals $X_t(nT)$ and $X_{t-T/2}(nT)$, where $T$ denotes the bit period, that feed block 23. The latter is responsible for the production of the estimation $b_n$, $b_{n-1}$, $b_{n-2}$,... of the transmitted bit sequence by performing channel equalisation, soft decision decoding and decision making. These operations are implemented by means of recursive minimisation of the cost function

$$V\left(\hat{b}_n, \hat{b}_{n-1}, \hat{b}_{n-2}, \ldots\right)$$

defined as

$$\sum_{k=-\infty}^{n+N}\left[\left[X_t(kT) \quad X_{t-T/2}(kT)\right] - C(\hat{b}_k\hat{b}_{k-1}\ldots.\hat{b}_{k-M+1})\right]W\left[\left[X_t(kT) \quad X_{t-T/2}(kT)\right] - C(\hat{b}_k\hat{b}_{k-1}\ldots.\hat{b}_{k-M+1})\right]^*$$

in which "*" signifies the vector transposition operation, $N$ is a positive integer and $M$ is equal to $M_1+M_2-1$, where $M_1$ is the number of information bits $b_k$, $k=n$, $n-1$, ..., $n-M_1+1$ required for computing of a symbol $s_n$ and $M_2$ denotes the bit-length of inter-symbol interference of the combined pulse shaping filter 125, the transmission channel 135 and the channel separating filter 138 in FIG.1.1. Also, $W$ is a square positive definite matrix of size 2, $C(b_0b_1...b_{M-1})$ is a two-element row in a matrix $C$ of size $2^M \times 2$, where the row is indexed by the $M$-bit index $b_0b_1...b_{M-1}$. The resulted bit sequence $\{b_n\}$ is the receiver output. This along with the sampled baseband signals $X_t(nT)$ and $X_{t-T/2}(nT)$ feeds a training equipment 24 that computes a set of two-dimensional centres C(I), $I=0,1,...,2^M-1$, used as parameters in block 23. For each time instant $n$ this computation is carried out according to the formula

$$C_{new}(I) = C_{old}(I) + \lambda\left(\left[X_t(nT) \quad X_{t-T/2}(nT)\right] - C_{old}(I)\right)$$

where $\lambda$ takes a small positive value and $I$ denotes the number with binary representation $\hat{b}_n\hat{b}_{n-1}\hat{b}_{n-2}...\hat{b}_{n-M+1}$

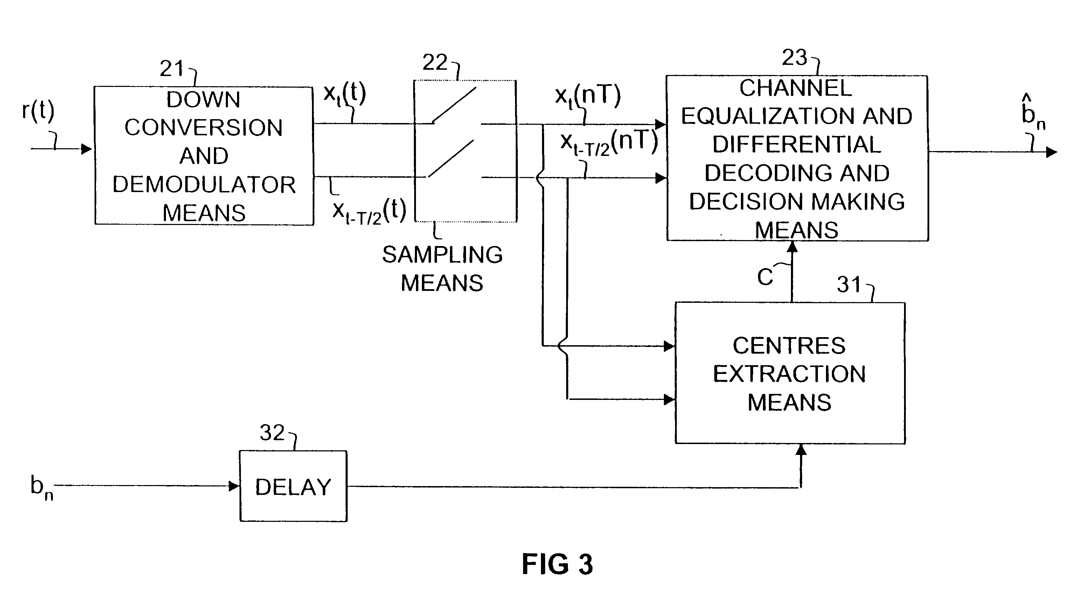

The centers $C(I)$, $I=0,1,... 2^M-1$ can also be computed by a non-recursive means 31 by letting the receiver operate in a training operation mode as shown in FIG.3. In this case, a delay time $d \cdot T$ is introduced by a delay element 32 so that the transmitted information bit $b_n$ is aligned with the baseband data $[X_t(nT) \; X_{t-T/2}(nT)]$ at the receiver side. The training process is carried out in two steps. First, given a training sequence $S$ of information bits $b_0$, $b_1$,...,$b_{L-1}$ of length L, $2^M$ mutually disjoint sets $S_I$, $I=0,1,... 2^M-1$ are produced by associating to each set $S_I$ the time instances $n$, $0 \le n < L - M$ that specify the bit sub-sequences $\{b_n, b_{n+1},..., b_{n+M-1}\}$ for which $b_nb_{n+1} ... b_{n+M-1}$ is the binary representation of the index $I$. Second, the values $C(I)$, $I=0,1,..., 2^M-1$ are computed based on the following expression:

$$\frac{1}{|S_I|}\sum_{n\in S_I}\left[X_t\big((n+d)T\big)\quad X_{t-T/2}\big((n+d)T\big)\right]$$

where $|S_I|$ signifies the cardinality of the set $S_I$.

The recursive minimisation of the cost function

$$V\big(\hat{b}_n,\hat{b}_{n-1},\hat{b}_{n-2},\ldots\big)$$

is implemented by a Viterbi algorithm (VA). A transition in the trellis diagram specifying the VA is associated to the $M$-tuple of $M$ consecutively estimated bits. Therefore, we have $2^M$ possible transitions that specify a VA with $2^{M-1}$ states. For example, if $M$ takes the value $4$, a transition in the trellis diagram specifying the VA is associated to a quadruple of the bits $b_n$, $b_{n-1}, b_{n-2}, b_{n-3}$ and the corresponding cost metric is

$$metric(I)=\left[\left[X_t(nT)\quad X_{t-T/2}(nT)\right]-C(I)\right]W\left[\left[X_t(nT)\quad X_{t-T/2}(nT)\right]-C(I)\right]^*$$

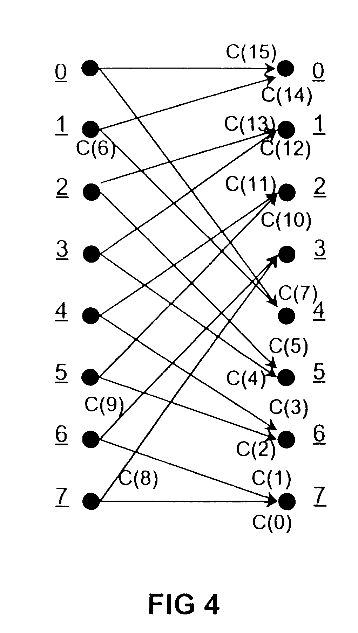

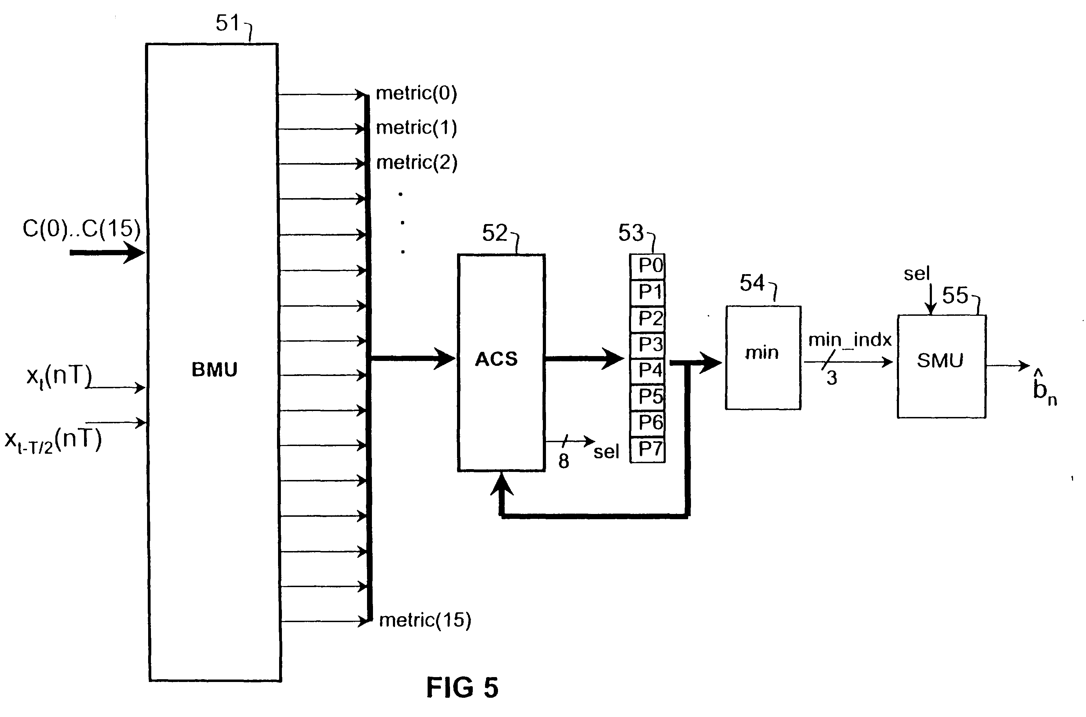

where $I$ is the number with binary representation $\hat{b}_n\hat{b}_{n-1}\hat{b}_{n-2}\hat{b}_{n-3}$. If $W$ is the identity matrix, the cost metric reduces to a Euclidean distance function. An 8-state VA is required for the cost minimisation which is specified by a 16-transition binary trellis diagram as shown in FIG. 4. The principle of VA is described in detail in G.D.Forney, 1973 ("The Viterbi algorithm", Proceedings of the IEEE, vol.61, no 3, March 1973, pp.268-278). In FIG. 5 a course block diagram of the 8-state VA is given. A Branch Metric Unit (BMU) 51 receives $[X_t(nT)\ X_{t-T/2}(nT)]$ from the sampling means 150 and the centers $C(I)$, $I=0,1,...,15$ from the centres extraction means 24 or 31 and produces the transition metrics $metric(I)$, $I=0,1,...,15$ associated to the transitions of the trellis diagram in FIG.4. An Add-Compare-Select unit (ACS) 52 recursively computes the new path metrics by adding the appropriate transition metrics to the old path metrics of the competing paths according to the trellis diagram, comparing and consequently selecting the survivor paths. The resulted path metrics of the 8 surviving paths $P0, P1, ...,P7$ are stored in a bank of registers 53, while the binary outcomes of the 8 comparisons are output in the signal $sel$. A minimum selector unit 54 produces a 3-bit index $min\_indx$ locating the path metric having the minimum value. A Survivor Memory Unit (SMU) 55 receives $sel$ from ACS unit 52 and $min\_indx$ from minimum selector unit 54, maintains the surviving sequences dictated by $sel$ and is responsible for extracting the decoded bit $b_n$. The surviving paths merge with high probability when traced backward, so SMU uses this property in order to find the decoded bit by using finite memory depth $N$.

A preferred embodiment of the down-conversion and demodulation operations according to the invention is shown in FIG. 6. The received signal $r(t)$ feeds two delay elements 61 and 62, as well as two real multipliers 63 and 64. The delay element 61 produces the signal $r(t-D)$ and feeds multiplier 63 , while the delay element 62 produces the signal $r(t-D-T/2)$ and feeds multiplier 64. The output of the multiplier 63 passes through a low pass filter 65 and produces the signal $X_t(t)$, while the output of the multiplier 64 passes through a low pass filter 66 and produces the signal $X_{t-T/2}(t)$.

Another preferred embodiment of the down-conversion and demodulation operations according to the invention is shown in FIG. 7. The received signal $r(t)$ feeds two real multipliers 715 and 720. The multipliers 715 and 720 also receive the quadrature phases of a reference waveform produced by a free running oscillator means 705 followed by a phase shifter 710. The output $r_i(t)$ of multiplier 715 feeds a matched filter 725 producing the signal $i(t)$, while the output $r_q(t)$ of multiplier 720 feeds an identical matched filter 730 producing the signal $q(t)$. A two-input inverse tangent means 735 receives $i(t)$ and $q(t)$ and produces a baseband phase signal $\varphi(t)$. A delay element 740 introduces a time delay of a bit period T to the phase signal. The delayed signal $\varphi(t-T)$ is subtracted from $\varphi(t)$ on a subtractor means 745 and the result undergoes a modulo-$2\pi$ operation on means 750 producing the signal $X_t(t)$. The signal $X_{t-T/2}(t)$ is produced by delaying $X_t(t)$ by a time interval equal to $T/2$ on a delay means 755.

## Claims

1. A method for differential coherent demodulation of a signal $r(t)$, said signal $r(t)$ being the result of processing a sequence of information symbols $\{s_n\}$, said processing comprises successive steps of filtering with a pulse shaping filter, modulating a carrier of frequency $f_0$, transmitting over a channel that introduces noise and inter-symbol interference (ISI) and filtering by a channel separating filter, said sequence $\{s_n\}$ being obtained by differential encoding and constellation mapping of a sequence of information bits $\{b_n\}$, in which computing of a symbol $s_n$, requires the values of the symbol $s_{n-l}$ and $M_1$ information bits $b_k$, $k=n, n-1, ...,n-M_l+1$ produced at successive dates separated by a time interval $T$, where the inter-symbol interference of the combined pulse shaping filter, transmission channel and channel separating filter extends over $M_2$ consecutive information bits and wherein the method is characterised by:

demodulating the signal $r(t)$ to obtain a pair of signals $[X_t(t), X_{t-T/2}(t)]$;
sampling of the signals $[X_t(t), X_{t-T/2}(t)]$ at successive dates separated by a time interval $T$ to obtain $[X_t(nT), X_{t-T/2}(nT)]$ at each date $n$;
minimising a quantity

$$V(\hat{b}_n, \hat{b}_{n-1}, \hat{b}_{n-2}, ...)$$

at date $n$ in which $\hat{b}_n, \hat{b}_{n-1}, \hat{b}_{n-2}, ...$ is a semi-infinite bit sequence, said quantity being equal to

$$\sum_{k=-\infty}^{n+N}\left[\left[X_t(kT) \quad X_{t-T/2}(kT)\right] - C(\hat{b}_k \hat{b}_{k-1}....\hat{b}_{k-M+1})\right]W\left[\left[X_t(kT) \quad X_{t-T/2}(kT)\right] - C(\hat{b}_k \hat{b}_{k-1}....\hat{b}_{k-M+1})\right]^*$$

in which "*" signifies the vector transposition operation, $N$ is a positive integer, $M$ is equal to $M_1+M_2-l$, $W$ is a square positive definite matrix of size 2, $C(b_0 b_1...b_{M-1})$ is a two-element row in a matrix $C$ of size $2^M \times 2$, said row being indexed by the $M$-bit index $b_0 b_1...b_{M-1}$, said minimisation obtained by a recursive algorithm; computing the values of the elements of said matrix $C$.

2. A method according to claim l, in which the modulation is of the offset differential quadrature phase shift keying type or of the Gaussian minimum shift keying type, or of the minimum shift keying type, or of the tamed frequency modulation type, wherein demodulating the signal $r(t)$ is characterised by the following successive actions:

the delayed signals $r(t-D)$ and $r(t-D-T/2)$ are produced, in which $D$ denotes a positive delay time;
the signals $r(t) \cdot r(t-D)$ and $r(t) \cdot r(t-D-T/2)$ are produced;
low pass filtering is carried out on these signals to produce the signals $X_t(t)$ and $X_{t-T/2}(t)$.

3. A method according to claim 1, in which the modulation is of the offset differential quadrature phase shift keying type or of the Gaussian minimum shift keying type, or of the minimum shift keying type, or of the tamed frequency modulation type, wherein demodulating the signal $r(t)$ is characterised by the following successive actions:

a first signal $r_i(t)$ is produced by multiplying the signal $r(t)$ with a first reference wave having a first phase and a frequency equal to a carrier of the received signal and a second signal $r_q(t)$ is produced by multiplying the signal $r(t)$ with a second reference wave having the carrier frequency and a phase orthogonal to the first one;
matched filtering is carried out on the said signals $r_i(t)$ and $r_q(t)$ to produce the signals $i(t)$ and $q(t)$;
the inverse tangent signal $\varphi(t)$ of the two dimensional signal $(i(t), q(t))$ is produced;
the delayed signal $\varphi(t-T)$ is produced;
the signal $X_t(t)$ is produced by computing the modulo-$2\pi$ difference of the signals $\varphi(t)$ and $\varphi(t-T)$;
the signal $X_{t-T/2}(t)$ is produced as the delayed version $X_t(t-T/2)$ of $X_t(t)$.

4. A method according to claim 1, wherein the said recursive algorithm means is a Viterbi algorithm with full state space of size $2^{M-1}$, or a Viterbi algorithm where a subset of the Viterbi state space is retained at each date.

5. A method according to claim 1, wherein computing the matrix $C$ is characterised by the following successive actions:

a training sequence $S$ of information bits $b_0, b_1, ..., b_{L-1}$ having length $L$ is generated by a bit source at successive dates separated by a time interval T;
$2^M$ mutually disjoint sets $S_l$, $l=0,1,... 2^M -1$ are produced by associating to each set $S_l$ of rank $l$ the dates $n$ that specify the bit sub-sequences $\{b_n, b_{n+1},..., b_{n+M-1}\}$ for which $b_n b_{n+1} ... b_{n+M-1}$ signifies the binary representation of the index $l$, $n$ being defined for $0 \leq n < L - M$;
the signals $X_t(nT)$ and $X_{t-T/2}(nT)$ are produced by letting the sequence $S$ undergo the transmission, channel and reception steps according to claim 1, $n$ being defined for the dates $d, d+1, d+2,..., d+L-1$ in which $d$ denotes the constant latency between the information bit of rank $n$ and the sampled output signals of rank $n$; the row $C(l)$ of rank $l=0,1,...,2^M$ -$l$ is obtained by evaluating the expression

$$\frac{1}{|S_l|} \sum_{n \in S_l} \left[ X_t\left((n+d)T\right) \quad X_{t-T/2}\left((n+d)T\right) \right]$$

on which $|S_l|$ signifies the cardinality of the set $S_l$.

**6.** A method according to claim 1, wherein computing the matrix $C$ is characterised by a recursive procedure producing the new value $C_{new}(l)$ of the row of rank $l$ at date $n$ as follows:

if said rank $l$ at date $n$ has a binary representation $\hat{b}_n \hat{b}_{n-1} \hat{b}_{n-2} ... \hat{b}_{n-M+1}$ then the value $C_{new}(l)$ is obtained by evaluating the expression

$$C_{old}(I) + \lambda \left( \left[ X_t(nT) \quad X_{t-T/2}(nT) \right] - C_{old}(I) \right)$$

in which $\lambda$ takes a small positive value and $C_{old}(l)$ denotes the value of the row at date $n$-$1$;
otherwise, the value $C_{new}(l)$ of the row with said rank $l$ maintains at date $n$ the value $C_{old}(l)$ of that row at date $n$-$1$.

**7.** An apparatus for differential coherent demodulation of a signal $r(t)$, said signal $r(t)$ being the result of processing a sequence of information symbols $\{s_n\}$, said processing comprises successive steps of filtering with a pulse shaping filter, modulating a carrier of frequency $f_0$, transmitting over a channel that introduces noise and inter-symbol interference (ISI) and filtering by a channel separating filter, said sequence $\{s_n\}$ being obtained by differential encoding and constellation mapping of a sequence of information bits $\{b_n\}$, in which computing of a symbol $s_n$, requires the values of the symbol $s_{n-1}$ and $M_1$ information bits $b_k$, $k=n$, $n-1$, ...,$n-M_1$+$l$ produced at successive dates separated by a time interval $T$, where the inter-symbol interference of the combined pulse shaping filter, transmission channel and channel separating filter extends over $M_2$ consecutive information bits and wherein the aparatus is characterised by:

means for demodulating the signal $r(t)$ to obtain a pair of signals $[X_t(t), X_{t-T/2}(t)]$ ;
a pair of sampling devices that sample the signals $[X_t(t), X_{t-T/2}(t)]$ at successive dates separated by a time interval $T$ to obtain $[X_t(nT), X_{t-T/2}(nT)]$ at each date $n$;
means for minimising a quantity

$$V(\hat{b}_n, \hat{b}_{n-1}, \hat{b}_{n-2}, ...) \; ;$$

at date $n$ in which $\hat{b}_n, \hat{b}_{n-1}, \hat{b}_{n-2},...$ is a semi-infinite bit sequence, said quantity being equal to

$$\sum_{k=-\infty}^{n+N} \left[ \left[ X_t(kT) \quad X_{t-T/2}(kT) \right] - C(\hat{b}_k \hat{b}_{k-1} .... \hat{b}_{k-M+1}) \right] W \left[ \left[ X_t(kT) \quad X_{t-T/2}(kT) \right] - C(\hat{b}_k \hat{b}_{k-1} .... \hat{b}_{k-M+1}) \right]^*$$

in which "*" signifies the vector transposition operation, $N$ is a positive integer, $M$ is equal to $M_1$+$M_2$-$1$, $W$ is a square, positive definite matrix of size 2, $C(b_0 b_1 ... b_{M-1})$ is a two-element row in a matrix $C$ of size $2^M \times 2$, said row being indexed by the $M$-bit index $b_0 b_1 ... b_{M-1}$, said minimisation being obtained by recursive algorithm means;
means for computing the values of the elements of said matrix $C$.

**8.** An apparatus according to claim 7, in which the modulation is of the offset differential quadrature phase shift keying type or of the Gaussian minimum shift keying type, or of the minimum shift keying type, or of the tamed frequency modulation type, wherein said means for demodulating the signal $r(t)$ is characterised by:

two delay means produce the signals $r(t-D)$ and $r(t-D-T/2)$, where $D$ denotes a positive delay time;

two multiplier means produce the signals $r(t) \cdot r(t-D)$ and $r(t) \cdot r(t-D-T/2)$ ;
two low pass filter means coupled to receive as inputs the said multiplier output signals produce the filtered signals $X_t(t)$ and $X_{t-T/2}(t)$.

**9.** An apparatus according to claim 7, in which the modulation is of the offset differential quadrature phase shift keying type or of the Gaussian minimum shift keying type, or of the minimum shift keying type, or of the tamed frequency modulation type, wherein said means for demodulating the signal $r(t)$ is characterised by:

a first multiplier means produces the signal $r_i(t)$ by multiplying the signal $r(t)$ with a first reference wave having a first phase and a frequency equal to a carrier of the received signal and a second multiplier means produces the signal $r_q(t)$ by multiplying the signal $r(t)$ with a second reference wave having the carrier frequency and a phase orthogonal to the first one;
a first matched filter means coupled to receive as input the said signal $r_i(t)$ produces the filtered signal $i(t)$ and a second matched filter means coupled to receive as input the said signal $r_q(t)$ produces the filtered signal $q(t)$;
an inverse tangent means coupled to receive as inputs the said signals $i(t)$ and $q(t)$ produces a signal $\varphi(t)$;
a delay means coupled to receive as input the said signal $\varphi(t)$ produces the signal $\varphi(t-T)$;
a modulo-$2\pi$ difference means coupled to receive as inputs the said signals $\varphi(t)$ and $\varphi(t-T)$ produces the signal $X_t(t)$;
a delay means coupled to receive as input the said signal $X_t(t)$ introduces a delay of nominally half bit period $T/2$ and produces the signal $X_{t-T/2}(t)$.

**10.** An apparatus according to claim 7, wherein the said recursive algorithm means is a Viterbi algorithm with full state space of size $2^{M-1}$, or a Viterbi algorithm where a subset of the Viterbi state space is retained at each date.

**11.** An apparatus according to claim 7, wherein the said means for computing the matrix $C$ is characterised by:

a bit source means that generates a training sequence $S$ of information bits $b_0, b_1, ..., b_{L-1}$ emitted at successive dates separated by a time interval T;
means for producing $2^M$ mutually disjoint sets $S_l$, $l=0,1,... 2^M -1$ by associating to each set $S_l$ of rank $l$ the dates $n$ that specify the bit sub-sequences $\{b_n, b_{n+1},..., b_{n+M-1}\}$ for which $b_n b_{n+1} ... b_{n+M-1}$ signifies the binary representation of the index $l$, $n$ being defined for $0 \le n < L - M$ ;
a delay means coupled to receive as input the said bit sequence $S$ introduces a time delay of $d$ bit periods, where $d \cdot T$ is equal to the constant latency time elapsing between the date an information bit $b_n$ of rank n is fed to the transmitter in order to undergo the processing steps according to claim 7 and the associated sampled demodulator output signals of rank n are produced;
means for evaluating the expression

$$\frac{1}{|S_I|} \sum_{n \in S_I} \left[ X_t\big((n+d)T\big) \quad X_{t-T/2}\big((n+d)T\big) \right]$$

produces the value of row $C(l)$ for each value of the index $l=0,1,... 2^M -1$, where $|S_l|$ signifies the cardinality of the set $S_l$.

**12.** An apparatus according to claim 7, wherein the said means for computing the matrix C is characterised by:

means for identifying the row $C(l)$ of rank $l$ at each date $n$, said rank $l$ having binary representation $\hat{b}_n \hat{b}_{n-1} \hat{b}_{n-2} ... b_{n-M+1}$ ;
means for evaluating the recursive expression

$$C_{old}(I) + \lambda \left( \left[ X_t(nT) \quad X_{t-T/2}(nT) \right] - C_{old}(I) \right)$$

in which $\lambda$ takes a small positive value and $C_{old}(l)$ denotes the value of the row at date $n-1$.

**FIG 1.1** PRIOR ART

FIG 1.2 PRIOR ART

**FIG 1.3** PRIOR ART

EP 1 037 439 A1

**FIG 1.4**  PRIOR ART

EP 1 037 439 A1

$\hat{b}_n$

144 RECEIVER

21 DOWN CONVERSION AND DEMODULATOR MEANS

$r(t)$

$x_t(t)$

$x_{t-T/2}(t)$

22

SAMPLING MEANS

$x_t(nT)$

$x_{t-T/2}(nT)$

23 CHANNEL EQUALIZATION AND DIFFERENTIAL DECODING AND DECISION MAKING MEANS

C

24 CENTRES EXTRACTION MEANS

**FIG 2**

FIG 3

**FIG 4**

FIG 5

EP 1 037 439 A1

FIG 6

FIG 7

**European Patent Office**

## EUROPEAN SEARCH REPORT

Application Number

EP 99 60 0009

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | GUNTHER C G ET AL: "DOQPSK - DIFFERENTIAL DEMODULATION OF FILTERED OFFSET QPSK" PROCEEDINGS OF THE VEHICULAR TECHNOLOGY CONFERENCE, STOCKHOLM, JUNE 8 - 10, 1994, vol. 3, no. CONF. 44, 8 June 1994 (1994-06-08), pages 1542-1546, XP000497680 INSTITUTE OF ELECTRICAL AND ELECTRONICS ENGINEERS ISBN: 0-7803-1928-1 * abstract * page 1542 - page 1545, section I - section III | 1,4,7,10 | H04L27/233 H04L25/03 |
| A | | 2,3,5,6, 11,12 | |
| D,X | US 5 615 230 A (GUENTHER CHRISTOPH ET AL) 25 March 1997 (1997-03-25) * abstract * * column 1, line 36 - column 2, line 38 * * column 3, line 15 - line 49 * | 1,4,7,10 | |
| A | | 2,3,5,6, 11,12 | **TECHNICAL FIELDS SEARCHED (Int.Cl.7)** |
| D,X | GHASSAN KAWAS KALEH: "DIFFERENTIAL DETECTION VIA THE VITERBI ALGORITHM FOR OFFSET MODULATION AND MSK-TYPE SIGNALS" IEEE TRANSACTIONS ON VEHICULAR TECHNOLOGY, vol. 41, no. 4, 1 November 1992 (1992-11-01), pages 401-406, XP000362354 ISSN: 0018-9545 * abstract * page 401 - page 402, section I page 404, section IV-A | 1,4,7,10 | H04L |
| A | | 2,3,5,6, 11,12 | |

-/--

The present search report has been drawn up for all claims

| Place of search | Date of completion of the search | Examiner |
|---|---|---|
| THE HAGUE | 22 October 1999 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 99 60 0009

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | MAKRAKIS D ET AL: "AN IMPROVED VITERBI DECODER FOR THE DIFFERENTIAL DETECTION OF CONTINUOUS PHASE MODULATION SCHEMES" DIGITAL COMMUNICATIONS, SASKATOON, MAY 11 - 12, 1988, no. CONF. 2, 11 May 1988 (1988-05-11), pages 78-87, XP000012943 INSTITUTE OF ELECTRICAL AND ELECTRONICS ENGINEERS * abstract * page 79 - page 81, section 2.2 - section 3 | 1-12 | |
| A | ADACHI F: "REDUCED-STATE VITERBI DIFFERENTIAL DETECTION USING A RECURSIVELY ESTIMATED PHASE REFERENCE FOR M-ARY DPSK" IEE PROCEEDINGS: COMMUNICATIONS, vol. 142, no. 4, 1 August 1995 (1995-08-01), pages 263-270, XP000530228 ISSN: 1350-2425 * abstract * page 263 - page 265, section 1 - section 2.2 | 1-12 | |
| A | EP 0 792 053 A (PHILIPS ELECTRONICS NV) 27 August 1997 (1997-08-27) * abstract * * page 2, line 3 - page 4, line 25 * | 1-12 | |

-/--

TECHNICAL FIELDS
SEARCHED (Int.Cl.7)

The present search report has been drawn up for all claims

| Place of search | Date of completion of the search | Examiner |
|---|---|---|
| THE HAGUE | 22 October 1999 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 99 60 0009

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | THEODORIDIS S ET AL: "SCHEMES FOR EQUALISATION OF COMMUNICATION CHANNELS WITH NONLINEAR IMPAIRMENTS" IEE PROCEEDINGS: COMMUNICATIONS, vol. 142, no. 3, 1 June 1995 (1995-06-01), pages 165-171, XP000522228 ISSN: 1350-2425 * abstract * * page 167, right-hand column, paragraph 2 - page 168, left-hand column, paragraph 2 * page 170 - page 171, section 7 - section 8 | 1,7 | |
| A | EP 0 637 883 A (NIPPON ELECTRIC CO) 8 February 1995 (1995-02-08) * abstract * * figure 5 * | 2,3,8,9 | |
| A | SPILKER J J: "COHERENT AND DIFFERENTIALLY COHERENT TRANSMISSION TECHNIQUES" DIGITAL COMMUNICATIONS BY SATELLITE,1977, pages 295-335, XP000763848 * page 331 - page 332; figure 11.28 * | 3,9 | |
| A | HLADIK S M ET AL: "PERFORMANCE OF DIFFERENTIALLY DETECTED /4-SHIFTED DQPSK WITH DIVERSITY" FROM PIONEERS TO THE 21ST. CENTURY, DENVER, MAY 10 - 13, 1992, vol. 2, no. CONF. 42, 10 May 1992 (1992-05-10), pages 748-751, XP000339892 INSTITUTE OF ELECTRICAL AND ELECTRONICS ENGINEERS ISBN: 0-7803-0673-2 * figure 4 * | 3,9 | |

TECHNICAL FIELDS SEARCHED (Int.Cl.7)

The present search report has been drawn up for all claims

| Place of search | Date of completion of the search | Examiner |
|---|---|---|
| THE HAGUE | 22 October 1999 | Koukourlis, S |

EPO FORM 1503 03.82 (P04C01)

**ANNEX TO THE EUROPEAN SEARCH REPORT
ON EUROPEAN PATENT APPLICATION NO.**

EP 99 60 0009

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-1999

| Patent document cited in search report | | Publication date | Patent family member(s) | | Publication date |
|---|---|---|---|---|---|
| US 5615230 | A | 25-03-1997 | EP | 0670648 A | 06-09-1995 |
| EP 0792053 | A | 27-08-1997 | FR | 2745139 A | 22-08-1997 |
| | | | JP | 9289529 A | 04-11-1997 |
| | | | US | 5910968 A | 08-06-1999 |
| EP 0637883 | A | 08-02-1995 | JP | 2797916 B | 17-09-1998 |
| | | | JP | 7050700 A | 21-02-1995 |
| | | | NO | 942879 A | 06-02-1995 |
| | | | US | 5485489 A | 16-01-1996 |